# EUROPEAN PATENT SPECIFICATION

(11) **EP 1 785 715 B1**
(45) Date of publication and mention of the grant of the patent: **06.04.2011**
(21) Application number: 06255819.2
(22) Date of filing: 14.11.2006
(51) Int. Cl.: G01N 1/00, G01N 1/36

(54) **PM generating apparatus**
PM-Erzeugungsvorrichtung
Appareil de génération de PM

(30) Priority: 14.11.2005 JP 2005329107
(43) Date of publication of application: 16.05.2007
(73) Proprietor: NGK Insulators, Ltd., Nagoya-City, Aichi Pref. 467-8530 (JP)
(72) Inventor: Yamada Toshio,, Nagoya City, Aichi-ken, 467-8530 (JP); Hijikata Toshihiko,, Nagoya City, Aichi-ken, 467-8530 (JP); Yamada Satoru,, Nagoya City, Aichi-ken, 467-8530 (JP)
(74) Representative: Paget, Hugh Charles Edward

(56) References cited:
- EP-A- 1 482 142
- US-A1- 2005 107 973
- US-B1- 6 308 130

## Description

### BACKGROUND OF THE INVENTION

Field of the Invention

The invention relates to a PM generating apparatus for generating particulate matter (PM) in a gas in order to evaluate an exhaust gas purifying apparatus equipped with DPF, a catalyst, etc., and to a PM generating method.

Background Art

Fine particles and toxic substances contained in exhaust gas from various internal combustion engines have a significant effect on human bodies and the environment. The need for preventing emission of particulate matter (PM) and toxic substances to the atmosphere is increasing. In particular, the effects of PM, NOₓ (nitrogen oxide), and the like discharged from diesel engines are serious and regulations prohibiting their emission are reinforced worldwide. For this reason, exhaust gas purifying apparatuses equipped with a diesel particulate filter (DPF) for removing PM or a catalyst useful for reducing NOₓ into nitrogen and water have been investigated and developed. Some high performance exhaust gas purifying apparatuses have been introduced into the market.

However, no means for testing the exhaust gas purifying apparatus and accurately and correctly evaluating the performance and durability of such a exhaust gas purifying apparatus has been proposed until now. There are few prior art documents. Although some prior art technologies relating to an evaluation gas feeder (Patent Document 1), an evaporation gas feeder (Patent Document 2), and a gas analyzer (Patent Document 3) are known, these technologies have problems such as incapability of adequately simulating actual exhaust gas (see Patent Document 1) and unavailability of a specific means for generating exhaust gas (see Patent Documents 2 and 3).

The prior art technologies are now described. As a means to evaluate the performance and the like of an exhaust gas purifying apparatus, a method of supplying exhaust gas from an actual automobile engine to an exhaust gas purifying apparatus and analyzing the gas processed by the exhaust gas purifying apparatus can be given. A method of mixing carbon powder or PM extracted from actual exhaust gas in a gas to produce a simulated exhaust gas imitating the exhaust gas from an actual automobile engine, feeding that gas to an exhaust gas purifying apparatus, and analyzing the gas processed by the exhaust gas purifying apparatus is also known (see Patent Document 1). In addition, a method of generating exhaust gas containing PM by burning diesel fuel or hydrocarbons and a method of generating exhaust gas containing PM by causing a graphite electrode to spark are also known. It is possible to evaluate the performance and the like of an exhaust gas purifying apparatus using such an exhaust gas (see Patent Document 1).

(Patent Document 1) JP-A-2005-214742

(Patent document 2) JP-A-10-318888

(Patent document 3) JP-A-10-319006

US 2005/107973 describes a synthetic gas generator and gas reactor test system. A mixture of gas components creates a simulated exhaust gas. This simulated exhaust gas runs through a humidifier to a furnace which heats the gas. From there, the gas flows to reactors to be tested, which may be catalytic or non-catalytic.

EP 1 482 142 describes an apparatus and method for testing catalytic convertor durability. Fuel is supplied through a nozzle to a combustor at a controller air to fuel ratio which is mixed and which is continuously and effectively stoichiometrically combusted to produce an exhaust product. This exhaust product is directed to the catalytic convertor to be tested. This system is said to rapidly age the catalytic convertor.

### SUMMARY OF THE INVENTION

However, the method of using exhaust gas from an actual automobile engine and the like has a problem of requiring large expensive equipment. In the method of producing exhaust gas imitating exhaust gas from an automobile engine (see Patent Document 1), on the other hand, the fuel used for producing the simulated gas may differ from the fuel actually used. In addition, the simulated exhaust gas may not sufficiently imitate actual exhaust gas as mentioned above, because collected PM is used. In addition, in the method of generating exhaust gas containing PM by burning diesel fuel or hydrocarbons, not only is it difficult to control the amount of PM generated, but also the method tends to cause a misfire. The method of generating exhaust gas containing PM by causing a graphite electrode to spark has a problem of a limited amount of PM that can be generated in a short period of time (see Patent Document 1). In this manner, all prior art technologies have some problems in the means for generating exhaust gas for evaluation to be supplied to an exhaust gas purifying apparatus.

The present invention has been achieved in view of this situation and has an object of providing a means suitable for producing and supplying exhaust gas for evaluation to be supplied to an exhaust gas purifying apparatus in a safe and stable manner and a means for correctly and accurately evaluating performance and durability of the exhaust gas purifying apparatus. Another object of the present invention is to provide a means for evaluating an exhaust gas purifying apparatus in a short period of time by generating a large amount of PM in a short period of time. The inventors have conducted extensive studies from the above point of view and found that the above objects can be achieved by the following means.

Specifically, the present invention provides a PM generating apparatus (particulate matter generator) as set out in claim 1. The PM generating apparatus of the present invention is an apparatus for generating PM in a gas, that is, an apparatus which produces and supplies a gas in which PM is generated (PM-containing gas).

In the PM generating apparatus of the present invention, it is preferable that the above-mentioned intermittent fuel injection means is equipped with a electric valve and a fuel is intermittently injected by controlling the valve-opening time and/or valve-opening interval of the electric valve.

In addition, it is preferable that the PM generating apparatus of the present invention is equipped with a fuel injection pressure regulating means by which the injection pressure of a fuel can be changed. In this instance, the fuel injection pressure regulating means is preferably a means by which the fuel injection pressure can be changed one or more times in the course of fuel injection.

The fuel injection pressure of the PM generating apparatus is preferably 0.1 MPa or more, but not more than 1.0 MPa.

In addition, when a liquid fuel and a gaseous fuel are used together, the PM generating apparatus of the present invention is preferably equipped with a fuel-mixing means that can produce a fuel mixture by previously mixing the liquid fuel and gaseous fuel before injection.

Furthermore, the PM generating apparatus of the present invention is preferably equipped with a gas mixing means capable of mixing a gas other than the fuel with the fuel before injection. In this instance, the gas other than the fuel is preferably air.

The injection angle when the fuel is injected from the intermittent fuel injection means of the PM generating apparatus of the present invention is preferably from 5° or more to 120° or less.

In the PM generating apparatus of the present invention, the liquid fuel is preferably gas oil or heavy fuel oil.

In the PM generating apparatus of the present invention, the valve-opening cycle for the intermittent fuel injection means is 10 to 300 msec.

In the PM generating apparatus of the present invention, the ratio between the valve-opening time and the valve-opening cycle, i.e., the duty ratio is 0.05 to 0.6.

In the PM generating apparatus of the present invention, the destination to which the PM-containing gas is sent is an exhaust gas purifying apparatus, wherein the PM-containing gas is suitably used for evaluating the exhaust gas purifying apparatus. In the present specification, evaluation of an exhaust gas purifying apparatus refers, for example, to evaluation of performance and/or evaluation of durability of the exhaust gas purifying apparatus. As examples of the exhaust gas purifying apparatus to be evaluated, exhaust gas purifying apparatuses equipped with a filter to remove fine particles from exhaust gas and/or a catalyst which decomposes toxic substances in exhaust gas can be given.

According to the present invention, an apparatus for evaluating an exhaust gas purifying apparatus by supplying a mixed PM-containing gas to the exhaust gas purifying apparatus, comprising a plurality of PM generating apparatuses of any type mentioned above, a controlling means which can operate the plurality of PM generating apparatuses under the same conditions or at least one PM generating apparatus under conditions differing from the conditions under which the other PM generating apparatuses are operated, and a PM-containing gas-mixing means to mix gases in which PM produced in a plurality of PM generating apparatuses was generated to obtain the mixed PM-containing gas is provided.

Next, according to the present invention, a PM generating method for generating PM in a gas by burning a liquid and/or gaseous fuel, comprising a step of burning a fuel by intermittently mixing the fuel with a combustion air is provided.

The PM generating apparatus of the present invention is equipped with an intermittent fuel injection means by which a fuel can be intermittently injected into combustion air. Therefore, the PM generating apparatus can generate a large amount of PM in a gas and can safely and stably supply a PM-containing gas which contains a large amount of PM. In addition, a problem such as a misfire can be obviated even if the PM generating apparatus is continuously operated for a long time. In the operation in which a fuel is continuously injected into combustion air, a misfire tends to easily occur if a large amount of PM is generated, hindering a continuous operation. This problem can be obviated according to the present invention.

Since the PM generating apparatus of the present invention does not use an exhaust gas from an actual automobile engine and the like, the equipment can be downsized and cost can be suppressed. In addition, since the PM generating apparatus of the present invention does not use collected PM and can arbitrarily select fuels, it is possible to fully imitate an exhaust gas discharged from an actual automobile engine. Therefore, the PM generating apparatus is suitable as a means for producing and supplying exhaust gas for evaluation to be supplied to an exhaust gas purifying apparatus.

In a preferred embodiment, the intermittent fuel injection means of the PM generating apparatus of the present invention is equipped with a electric valve and the fuel is intermittently injected by controlling the valve-opening time and/or valve-opening interval of the electric valve. Therefore, it is possible to freely control the period of time for which the fuel is continuously injected, the period of time for which fuel injection is suspended (not injected), intervals of fuel injection or suspension, fuel injection/suspension patterns, and the like. Therefore, it is easy to change the amount of PM generated and/or properties of the PM.

In addition, since the PM generating apparatus of the present invention is equipped with a fuel injection pressure regulating means in a preferred embodiment, it is possible to easily change the amount and/or properties of the PM generated by changing the injection pressure.

In addition, since the PM generating apparatus of the present invention is equipped with a fuel-mixing means that can produce a fuel mixture by previously mixing a liquid fuel and a gaseous fuel before injection in a preferred embodiment, fuels conforming to actual conditions of use can be selected from a wide range. It becomes easy to generate PM in an optional amount and/or with optional properties by combining a liquid fuel and a gaseous fuel.

Since, in a preferred embodiment, the PM generating apparatus of the present invention is equipped with a gas mixing means which can previously mix a gas other than the fuel with the fuel, even a fuel difficult to be injected due to a large viscosity, such as heavy fuel oil, can be easily injected. Therefore, not only can the choice of usable fuels be expanded, but it is also possible to generate PM having a wider range of properties by arbitrarily selecting the fuels.

In addition, since the fuel injection angle of the PM generating apparatus of the present invention is from 5° to 120° in a preferred embodiment, the fuel is excellently diffused. Therefore, fuel combustion becomes more stable and occurrence of a misfire can be prevented.

The apparatus for evaluating an exhaust gas purifying apparatus of the present invention comprises a plurality of PM generating apparatuses of the present invention, a controlling means which can operate the plurality of PM generating apparatuses under the same conditions or at least one PM generating apparatus under conditions differing from the conditions under which the other PM generating apparatuses are operated, and a PM-containing gas-mixing means for obtaining a mixed PM-containing gas by mixing PM-containing gases produced in a plurality of PM generating apparatuses. Therefore, the PM generating apparatus can safely and stably produce a PM-containing gas which contains a large amount of PM in a short period of time without a misfire and can supply the produced gas to an exhaust gas purifying apparatus. In addition, it is possible to precisely adjust the properties of the mixed PM-containing gas by changing the fuel, intervals of fuel injection or suspension, fuel injection pressure, and the like in each PM generating apparatus. Therefore, the PM generating apparatus is suitable as a means for accurately and correctly evaluating the performance and durability of exhaust gas purifying apparatuses.

Since the PM generating method of the present invention has a step of burning fuel by intermittently mixing with combustion air, the PM generating apparatus can generate a large amount of PM in a gas and can safely and stably produce a PM-containing gas which contains a large amount of PM without a misfire. Burning of a fuel while continuously mixing with combustion air easily induces a misfire and makes it impossible to continuously operate the PM generating apparatuses, whereby the amount of PM produced is limited. This problem can be obviated according to the present invention.

### BRIEF DESCRIPTION OF THE DRAWINGS

Figure 1 is a schematic view showing one embodiment of the PM generating apparatus of the present invention.

Figure 2 is a cross-section showing an expanded view of the area in which the intermittent fuel injection means of the combustion chamber is installed in the PM generating apparatus shown in Figure 1.

Figure 3 is a diagram schematically showing one embodiment of the exhaust gas purifying apparatus-evaluation apparatus according to the present invention.

Figure 4 is a diagram illustrating a valve-opening time, a valve-opening cycle, and a duty ratio.

Figure 5 is a perspective view showing the inside of the PM generating apparatus shown in Figure 1.

### DETAILED DESCRIPTION OF THE INVENTION AND PREFERRED EMBODIMENT

Embodiments of the present invention are described below with reference to the drawings. The following descriptions, however, should not be construed to limit the present invention to these embodiments. Various alterations, modifications, improvements, and substitution are possible by persons skilled in the art to the extent that the substance of the present invention is not altered. For example, although the drawings represent preferred embodiments of the present invention, the present invention is not limited to the embodiments illustrated in the drawings or the information provided in the drawings. Although the present invention may be practiced or verified by applying a means similar to or equivalent to the means described herein, a preferred means is the means described herein.

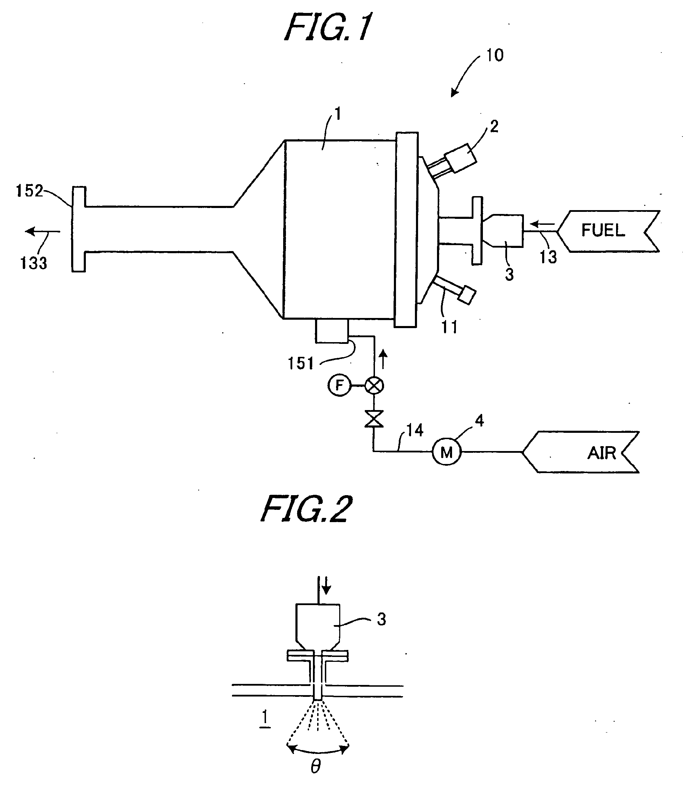

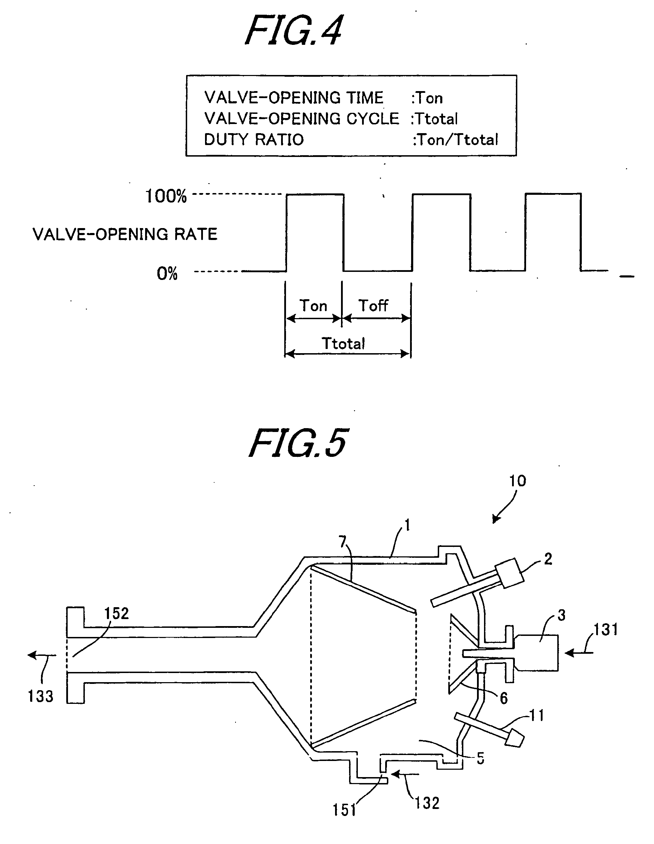

First, the PM generating apparatus of the present invention will be described. Figure 1 is a drawing showing the structure of one embodiment of the PM generating apparatus according to the present invention and Figure 5 is a perspective (cross-sectional) view showing the inside of the PM generating apparatus of Figure 1. Figure 1 shows the side of a combustion chamber 1, whereas Figure 5 is a sight through the side and shows the inside. The PM generating apparatus 10 shown in Figures 1 and 5 is provided with a combustion chamber 1, an intermittent fuel injection means 3 attached to the combustion chamber 1, and an air supply means 4 for combustion which consists of a compressor.

In the PM generating apparatus 10, the combustion air 132 is supplied into the combustion chamber 1 from the combustion air inlet 151 provided on the side of the combustion chamber 1 via a flow channel 14 by the combustion air supply means 4. The combustion air 132 supplied to the combustion chamber 1 is heated in the air preheating room 5 in the combustion chamber 1. On the other hand, a liquid and/or gaseous fuel 131 is sent to a flow channel 13 and intermittently injected into the combustion air 132 which is heated in the combustion chamber 1 (the air preheating room 5) by the intermittent fuel injection means 3. The combustion chamber 1 is provided with a baffle plate 6 to inject the fuel 131 in the direction of a combustion pipe 7

The fuel 131 is diluted by mixing with the combustion air 132 in the combustion chamber 1. The fuel 131 diluted with the combustion air 132 is ignited by a pilot burner 2 and combusted in the combustion pipe 7 to generate PM. The gas containing PM (PM-containing gas 133) is sent out from the gas outlet 152 of the combustion chamber 1 (to the left side in Figure 1) and supplied to, for example, an exhaust gas purifying apparatus, for evaluation.

The interior space of the combustion chamber 1 is constituted as a box having a cylindrical space and a conic space which gradually narrows in the gas flow direction (see Figure 5). The end face opposing the end face of the gas outlet 152 side from which the PM-containing gas 133 of the combustion chamber 1 is sent out (the right end of Figure 1) is provided with a pilot burner 2, an intermittent fuel injection means 3 and a flame detector 11. Although the PM generating apparatus 10 which can intermittently inject a fuel has only a small risk of misfire even in the case of producing a gas containing a large amount of PM, the flame detector 11 is installed in order to take all possible measures to ensure safety. The flow channel 13 of a fuel and the flow channel 14 of combustion air 132 consist of tubes.

The pilot burner is used at the time of first ignition during the start of use. The fuel and air are not supplied except at the time of first ignition during the start of use, and the burning of the fuel is continued using the one injected from the intermittent fuel injection means by virtue of the remaining heat in the combustion chamber. Needless to say, the burning of the pilot burner may be continued during that time, in case of need, with the supply of the fuel and air to the pilot burner. The fuel which is used for the pilot burner may be any kind thereof, but gas fuel such as propane is preferable in view of handling.

The intermittent fuel injection means 3 consists of an injector having an electric valve function. Therefore, injection time (valve-closing time), stop time, their intervals (cycle), injection/suspension patterns, and the like can be arbitrarily set by controlling the intermittent fuel injection means 3 using control equipment (not shown in Figure 1) of the PM generating apparatus 10. Of course, the intermittent fuel injection means of the PM generating apparatus of the present invention may consist of injection nozzles and an electric valve installed independently from the fuel flow channel (corresponding to the flow channel 13), in which the opening time and/or opening intervals (opening cycle) of the electric valve are controlled.

The intermittent fuel injection means 3 (injector) also has a function of regulating the fuel injection pressure. Therefore, the injection pressure of fuel can be freely changed during injection by controlling the intermittent fuel injection means 3 itself by the control equipment. Of course, fuel injection pressure in the PM generating apparatus of the present invention can be changed by a pressure controller consisting of injection nozzle and (an automatic or a manual) pressure controller installed independently on the fuel flow channel (corresponding to the flow channel 13), in which the controller is automatically controlled or manually adjusted, or by switching a plurality of pressure controllers.

The PM generating apparatus 10 is also equipped with a fuel-mixing means which is not shown in Figure 1. When a liquid fuel and a gaseous fuel are used together, a fuel mixture can be obtained before injection by separately supplying the liquid fuel and gaseous fuel to the intermittent fuel injection means 3 (injector) and mixing them in the intermittent fuel injection means 3 (injector). Furthermore, the PM generating apparatus 10 may be equipped with a gas mixing means (also not shown in Figure 1), which blends a gas other than the fuel, such as air, with the fuel before injection.

In the PM generating apparatus 10, the spray angle of the fuel injected from the intermittent fuel injection means 3 is about 60°. Figure 2 is a cross-section showing an expanded view of the area in which the intermittent fuel injection means 3 of the combustion chamber 1 is installed in the PM generating apparatus 10 shown in Figure 1. Figure 2 shows that the spray angle θ of the fuel injected into the combustion chamber 1 (or into the combustion air supplied to the combustion chamber 1) from the tip of the intermittent fuel injection means 3 inserted in the combustion chamber 1 is about 60°.

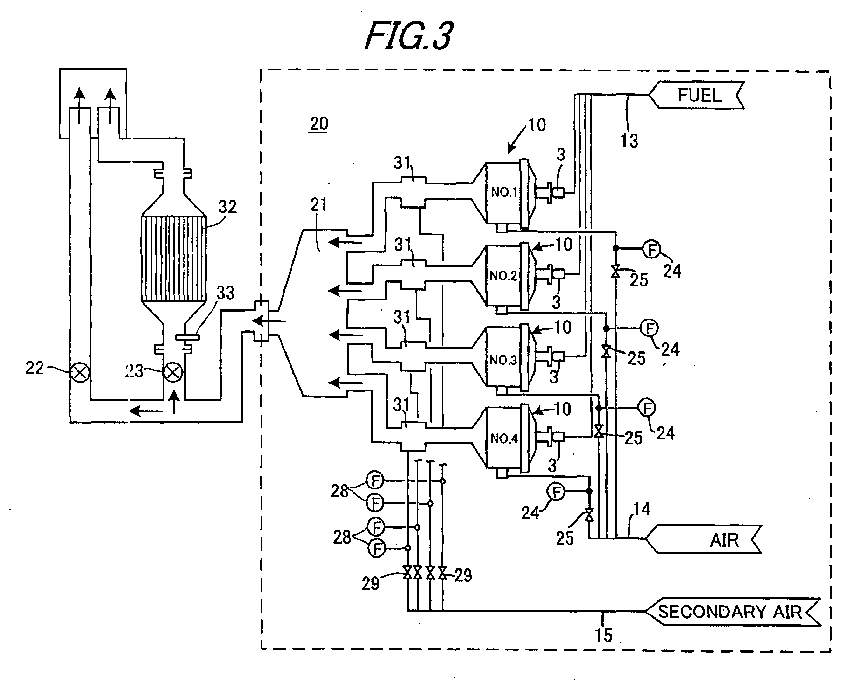

Next, an apparatus for evaluating the exhaust gas purifying apparatus according to the present invention will be described. Figure 3 is a diagram schematically showing one embodiment of the apparatus for evaluating the exhaust gas purifying apparatus (hereinafter referred to from time to time as "evaluation apparatus") according to the present invention. The evaluation apparatus 20 shown in Figure 3 is equipped with four PM generating apparatuses 10 (Nos. 1, 2, 3, 4) of the above-mentioned type. The evaluation apparatus 20 ensures that PM-containing gas produced in these PM generating apparatuses are mixed by a PM-containing gas mixing means and the resulting mixed PM-containing gas is supplied to the exhaust gas purifying apparatus 32 to evaluate the exhaust gas purifying apparatus 32. The changeover valves 22 and 23 select whether or not a mixed PM-containing gas is supplied to the exhaust gas purifying apparatus 32. A temperature detector 33 made of, for example, thermocouples is provided in the downstream of the changeover valves 22 and 23 and detects the temperature of the resulting mixed PM-containing gas. Details of the PM generating apparatuses 10 such as an intermittent fuel injection means are omitted and not shown in Figure 3.

The PM-containing gas mixing means comprises a secondary air feed zone 31 which adjusts the temperature and/or flow rate of the PM-containing gases produced by the PM generating apparatuses 10 of Nos. 1, 2, 3, and 4 and a main header part 21 which collects and mixes PM-containing gases produced by the PM generating apparatuses 10 of Nos. 1, 2, 3, and 4. That is, in the evaluation apparatus 20, with which four PM generating apparatuses 10 are connected in parallel, the mixed PM-containing gases which finally join and are mixed in the main header part 21 is supplied to an exhaust gas purifying apparatus 32. The number of the PM-containing gas-mixing means provided in the apparatus for evaluating an exhaust gas purifying apparatus according to the present invention is not necessarily four, but the evaluation apparatus may be formed from any number of PM generating apparatus with different specification, all or part thereof being connected in parallel, and a main header part.

Each PM generating apparatus 10 of the evaluation apparatus 20 is provided with a secondary air feed zone 31 on the gas outlet 152 side where PM-containing gas is sent out. In each secondary air feed zone 31, secondary air supplied by the secondary air supply means such as a compressor (not shown) via a flow channel 15 joins and is mixed with the PM-containing gas produced by each PM generating apparatus 10. The PM-containing gas of each PM generating apparatus 10 is adjusted to have a predetermined temperature and flow rate by controlling the flow rate of the secondary air. The flow rate of the secondary air is controlled by a flow meter 28 and a control valve 29. Specifically, the flow channel 15 of the secondary air sent to the secondary air feed zone 31 of each PM generating apparatus 10 is provided with a flow meter 28 and a control valve 29 for each system to control the flow rate of each secondary air. Although the control valve 29 may be of the type that can be manually adjusted independently from the flow meter 28, a type that can be automatically controlled based on the detected flow rate of the flow meter 28 is particularly preferred.

The evaluation apparatus 20 is equipped with a control means that can operate four PM generating apparatuses 10 under the same conditions or can operate at least one PM generating apparatus 10 under conditions differing from the conditions under which the other three PM generating apparatuses 10 are operated. The control means comprises an intermittent fuel injection means (omitted from Figure 3) having an electric valve function and a fuel injection pressure regulating function and a combustion air flow regulating means provided in the four PM generating apparatuses 10. Any type of electric valve such as an electromagnetic valve using an electromagnet, a type being opened and closed by motor rotation, a type using piezoelectric ceramic, and the like can be used.

The combustion air flow regulating means regulates the flow rate of combustion air and comprises a flow meter 24 and a control valve 25. Specifically, each flow channel 14 of combustion air sent to the combustion chambers of the PM generating apparatuses 10 is provided with a flow meter 24 and a control valve 25 to control the flow rate of the combustion air of each of combustion chambers. Although the control valve 25 may be of the type that can be manually adjusted independently from the flow meter 24, a type that can be automatically controlled based on the detected flow rate of the flow meter 24 is preferred.

The flow rate, temperature, PM content, properties of the contained PM, and the like of the resulting mixed PM-containing gas ultimately obtained in the main header part 21 can be freely altered by selecting and determining the injection pressure, injection/suspension time, their intervals, and injection/suspension patterns of the fuel injected by the intermittent fuel injection means in each of the four PM generating apparatuses 10 and further adjusting the flow rate of combustion air and the flow rate of the above-mentioned secondary air using control equipment (not shown in Figure 3) of the evaluation apparatus 20.

In Figure 3, an exhaust gas purifying apparatus 32 viewed from the side is shown. The exhaust gas purifying apparatus 32 of which the performance and/or durability are to be evaluated is constituted as a box having a cylindrical space and a conic space each gradually narrowing at the both ends. A filter to remove fine particles in the exhaust gas having a honeycomb structure, for example, or a catalyst such as an oxidation catalyst or a three way catalyst to decompose toxic substances in exhaust gas having a honeycomb structure, for example, is packed in the cylindrical space. In addition, the exhaust gas purifying apparatus 32 is preferably equipped with an analyzer (not shown in Figures) to analyze CO, HC, NOₓ, SOₓ, and the like in gases on the down stream side (the outlet side of exhaust gas).

### EXAMPLES

The present invention is described more specifically by way of examples which are not intended to limit the present invention.

(Example 1)

A PM-containing gas was produced by burning gas oil using the PM generating apparatus 10 shown in Figure 1 under the conditions of the fuel injection pressure, valve-opening time (fuel injection time), valve-opening cycle (fuel injection cycle), and duty ratio of the fuel by the intermittent fuel injection means using the electric valve in the PM generating apparatus 10, and changing the excess air ratio λ of the PM generating apparatus 10 shown in Table 1. In addition, the period of time until a misfire occurred was measured. Secondary air was mixed with the resulting PM-containing gas to obtain a PM-containing gas to be evaluated (evaluation gas). The amount of PM generated per unit period of time was measured by aspirating the PM-containing gas (evaluation gas). The evaluation results and the amount of fuel used are shown in Table 1.

[PM generation amount]
The PM-containing gas (evaluation gas) was aspirated and caused to pass through a filter paper (glass fiber filter #AP2005500, 55 mm, a product of Millipore Corporation) for a prescribed period of time (30 seconds to 5 minutes). The mass of PM adhering to the filter paper was measured using a micro balance ("ME-5F" manufactured by SARTORIUS K.K., 0.001 mg) and the amount of PM generated per unit period of time (g/Hr) was determined from the flow rate of the PM-containing gas (evaluation gas) after mixing secondary air, the flow rate of gas aspirated thereafter, and aspiration time.

[Excess air ratio λ]
Calculated from the amount of fuel supplied to the combustion chamber and the flow rate of the combustion air in a prescribed period of time such as for one second or one minute (including the amount of air previously mixed with the fuel, if any). In general, a high fuel concentration (small λ}) increases the amount of PM generated, but tends to induce a misfire.

[Duty ratio]
The duty ratio is the ratio of the valve-opening time to the valve-opening cycle and is represented by the valve-opening time (Ton)/ valve-opening cycle (Ttotal) as shown in Figure 4. In Figure 4, a fuel is injected when the valve-opening rate is 100% and fuel injection is suspended (not injected) when the valve-opening rate is 0%.

(Examples 2-18)

APM-containing gas was produced in the same manner as in Example 1, except for changing the fuel injection pressure, valve-opening time, and valve-opening cycle (duty ratio), and the excess air ratio λ. The period of time until a misfire occurred was measured and the amount of PM generated per unit period of time was determined. In Examples 17 and 18, the fuel injection pressure was changed in 2 stages. The evaluation results and the amount of fuel used are shown in Table 1.

(Comparative Examples 1 to 5)

A PM-containing gas was produced using the same apparatus as in Example 1, except that the fuel injection means was the type that could not inject fuel intermittently. The fuel was burnt by continuously injecting in and mixing with combustion air so that a prescribed excess air ratio λ may be ensured at a prescribed injection pressure. Otherwise, the experiment was carried out in the same manner as Example 1 to measure the period of time until a misfire occurred and determine the amount of PM generated per unit period of time. The evaluation results are shown in Table 1 together with the fuel injection pressure, the excess air ratio λ, and the amount of fuel used. When the fuel is continuously injected, the valve-opening time and valve-opening cycle are equivalent and the duty ratio is 1.

**[Table 1]**

| | Fuel | Fuel injection pressure (MPa) | Valve opening time (msec) | Valve opening cycle (msec) | Duty ratio | Fuel used (L/Hr) | Excess air ratio (λ) | Amount of PM generated (g/Hr) | Time until misfire occurs |
|---|---|---|---|---|---|---|---|---|---|
| Example 1 | Gas oil | 0.25 | 1.0 | 10 | 0.100 | 1.56 | 1.87 | 0.2 | > 30 Hr |
| Example 2 | Gas oil | 0.25 | 4.0 | 25 | 0.160 | 2.40 | 1.22 | 1.2 | > 30 Hr |
| Example 3 | Gas oil | 0.25 | 6.0 | 25 | 0.240 | 3.60 | 0.81 | 18.4 | > 30 Hr |
| Example 4 | Gas oil | 0.25 | 10.0 | 25 | 0.400 | 6.00 | 0.49 | 70.0 | > 30 Hr |
| Example 5 | Gas oil | 0.25 | 18.0 | 30 | 0.600 | 7.32 | 0.40 | 92.0 | > 30 Hr |
| Example 6 | Gas oil | 0.25 | 7.5 | 25 | 0.300 | 4.50 | 0.65 | 49.5 | > 30 Hr |
| Example 7 | Gas oil | 0.25 | 12.0 | 40 | 0.300 | 4.50 | 0.65 | 50.0 | > 30 Hr |
| Example 8 | Gas oil | 0.25 | 15.5 | 50 | 0.310 | 4.66 | 0.63 | 51.5 | > 30 Hr |
| Example 9 | Gas oil | 0.25 | 18.0 | 60 | 0.300 | 4.50 | 0.65 | 50.2 | > 30 Hr |
| Example 10 | Gas oil | 0.25 | 59.0 | 200 | 0.295 | 4.44 | 0.66 | 49.0 | > 30 Hr |
| Example 11 | Gas oil | 0.25 | 90.0 | 300 | 0.300 | 4.51 | 0.65 | 50.1 | > 30 Hr |
| Example 12 | Gas oil | 0.10 | 18.0 | 60 | 0.300 | 1.80 | 1.63 | 0.1 | > 30 Hr |
| Example 13 | Gas oil | 0.15 | 18.0 | 60 | 0.300 | 2.70 | 1.08 | 2.0 | > 30 Hr |
| Example 14 | Gas oil | 0.40 | 18.0 | 60 | 0.300 | 7.19 | 0.41 | 85.0 | > 30 Hr |
| Example 15 | Gas oil | 0.70 | 9.0 | 60 | 0.150 | 6.30 | 0.46 | 75.0 | > 30 Hr |
| Example 16 | Gas oil | 1.00 | 9.0 | 60 | 0.150 | 9.00 | 0.33 | 115.0 | > 30 Hr |
| Example 17 | Gas oil | 0.25 MPa/10 msec + 0.5 MPa/10 msec | | 45 | 0.444 | 4.55 | 0.64 | 51.0 | > 30 Hr |
| Example 18 | Gas oil | 0.25 MPa/2 msec + 1.0 MPa/1 msec | | 60 | 0.050 | 3.65 | 1.79 | 0.3 | > 30 Hr |
| Comparative Example 1 | Gas oil | 0.25 | Continuous | | 1.000 | 2.40 | 1.22 | 0.9 | > 30 Hr |
| Comparative Example 2 | Gas oil | 0.25 | Continuous | | 1.000 | 3.60 | 0.81 | 10.5 | < 1 Hr |
| Comparative Example 3 | Gas oil | 0.25 | Continuous | | 1.000 | 4.50 | 0.65 | N.A. | < 10 min |
| Comparative Example 4 | Gas oil | 0.50 | Continuous | | 1.000 | 4.50 | 0.65 | N.A. | < 10 min |
| Comparative Example 5 | Gas oil | 1.00 | Continuous | | 1.000 | 4.50 | 0.65 | N.A. | < 10 min |

(Examples 19 and 20)

A PM-containing gas was produced in the same manner as in Example 1 except that heavy fuel oil was used and the fuel injection pressure, valve-opening time and valve-opening cycle (duty ratio), and the excess air ratio λ was changed. The period of time until a misfire occurred was measured and the amount of PM generated per unit period of time was determined. The evaluation results are shown in Table 2 together with the fuel injection pressure, the excess air ratio λ, and the amount of fuel used.

(Comparative Examples 6 and 7)

A PM-containing gas was produced using the same apparatus as in Example 1, except that heavy fuel oil was used and the fuel injection means was a type that could not inject fuel intermittently. The fuel was burnt by continuously injecting in and mixing with combustion air so that a prescribed excess air ratio λ may be ensured at a prescribed injection pressure. Otherwise, the experiment was carried out in the same manner as Example 1 to measure the period of time until a misfire occurred and determine the amount of PM generated per unit period of time. The evaluation results are shown in Table 2 together with the fuel injection pressure, the excess air ratio λ, and the amount of fuel used.

**[Table 2]**

| | Fuel | Fuel injection pressure (MPa) | Valve opening time(msec) | Valve opening cycle (msec) | Duty ratio | Fuel used (L/Hr) | Excess ratio (λ) | Amount of PM generated (g/Hr) | Time until misfire occurs |
|---|---|---|---|---|---|---|---|---|---|
| Example 19 | Heavy fuel oil | 0.5 | 30 | 100 | 0.30 | 4.25 | 0.69 | 62.5 | >30Hr |
| Example 20 | Heavy fuel oil | 1.0 | 15 | 100 | 0.15 | 4.30 | 0.68 | 63.5 | >30Hr |
| Comparative Example 6 | Heavy fuel oil | 0.5 | Continuous | | 1.00 | 4.00 | 0.73 | N.A. | <5mm |
| Comparative Example 7 | Heavy fuel oil | 1.0 | Continuous | | 1.00 | 4.20 | 0.70 | N.A. | <5min |

(Example 21)

The same apparatus as that used in Example 1, except for being equipped with a fuel injection means for propane, was used. APM-containing gas was produced in the same manner as in Example 1 except that propane was used and the fuel injection pressure, valve-opening time and valve-opening cycle (duty ratio), and the excess air ratio λ changed. The period of time until a misfire occurred was measured and the amount of PM generated per unit period of time was determined. The evaluation results are shown in Table 3 together with the fuel injection pressure, the excess air ratio λ, and the amount of fuel used.

(Comparative Example 8)

A PM-containing gas was produced using the same apparatus as in Example 1, except that propane was used as a fuel and the fuel injection means was a type that could not inject fuel intermittently. The fuel was burnt by continuously injecting in and mixing with combustion air so that a prescribed excess air ratio λ may be ensured at a prescribed pressure. Otherwise, the experiment was carried out in the same manner as Example 1 to measure the period of time until a misfire occurred and determine the amount of PM generated per unit period of time. The evaluation results are shown in Table 3 together with the fuel injection pressure, the excess air ratio λ, and the amount of fuel used.

**[Table 3]**

| | Fuel | Fuel injection pressure (Mpa) | Valve opening time (msec) | Valve opening cycle (msec) | Duty ratio | Fuel used (L/Hr) | Excess air ratio λ | Amount of PM generated (g/hr) | Time until misfire occurs |
|---|---|---|---|---|---|---|---|---|---|
| Example 21 | Propane | 0.4 | 2.5 | 25 | 0.10 | 1628 | 0.70 | 10.7 | >30Hr |
| Comparative Example 8 | propane | 0.4 | Continuous | | 1.00 | 1630 | 0.70 | N.A. | Not ignited |

(Examples 22 to 25)

A PM-containing gas was produced in the same manner as in Example 1 except that a previously prepared mixture of gas oil and air or a previously prepared mixture of gas oil and propane were used as fuels and the fuel injection pressure, valve-opening time and valve-opening cycle (duty ratio), and the excess air ratio λ was changed. The period of time until a misfire occurred was measured and the amount of PM generated per unit period of time was determined. The evaluation results are shown in Table 4 together with the fuel injection pressure, the excess air ratio λ, and the amount of fuel used.

**[Table 4]**

| | Fuel | Fuel injection pressure (MPa) | Valve opening time (msec) | Valve opening cycle (msec) | Duty ratio | Fuel used (L/Hr) | Excess air ratio (λ) | Amount of PM generated (g/Hr) | Time until misfire occurs |
|---|---|---|---|---|---|---|---|---|---|
| Example 22 | Gas oil + air | 0.25 | 10 | 25 | 0.40 | Gas oil: 4.50 Air: 300 | 0.65 | 38.6 | >30Hr |
| Example 23 | Gas oil + air | 0.4 | 15 | 60 | 0.25 | Gas oil: 4.46 Air: 311 | 0.64 | 39.5 | >30Hr |
| Example 24 | Gas oil -- propane | 0.25 | 7.5 | 25 | 0.30 | Gas oil: 3.90 Propane: 180 | 0.65 | 43.1 | >30Hr |
| Example 25 | Gas oil -- propane | 0.4 | 7.5 | 25 | 0.30 | Gas oil: 6.25 Propane: 280 | 0.40 | 64.3 | >30Hr |

(Example 26)

An apparatus for evaluating exhaust gas purifying apparatus 20, as shown in Figure 3, was constituted by using four PM generating apparatuses shown in Figure 1. In the apparatus for evaluating exhaust gas purifying apparatus, the four PM generating apparatuses were operated under the conditions employed in Examples 1 to 25, and a secondary air was mixed respectively to each of the thus produced PM-containing gases with varying the amounts of the secondary air. As a result, it was confirmed that one may obtain any type of the air mixed PM-containing gases with any flow rate, at any temperature, and in any PM content with PM having any characteristic. The evaluation test runs were carried out by using an exhaust gas purification system provided with any one of a series of DPFs having outer diameter of 100mm to 380mm and a series of catalysts having outer diameter of 100mm to 380mm, and it was confirmed that the evaluation could be successively carried out.

(Discussion) It can be seen from the results shown in Tables 1 to 4 that when the fuel is intermittently injected into the combustion air and mixed with and combusted in the air to generate PM as in Examples 1 to 25, a continuous operation for a period longer than 30 hours is possible without occurrence of a misfire, even in the case in which the amount of PM generated is 10 g/Hr or more irrespective of type of fuel. In addition, the apparatus can be stably operated while ensuring a large maximum PM production of 115 g/Hr. Moreover, it was confirmed that the stable operations could be carried out in such a wide range that the valve-opening cycle for the intermittent fuel injection means is 10 to 300 msec, and the duty ratio is 0.05 to 0.6.

If PM is produced while continuously injecting the fuel as in Comparative Examples 1 to 8, stable burning is possible only under the conditions for producing a very small amount of PM. Burning becomes unstable if the amount of PM generation is attempted to increase any more. When the amount of PM generated is increased to 10 g/Hr or more, a misfire may easily occur and a continuous operation of one hour or more is impossible. The PM generation was limited to 10 g/Hr. An outstanding effect of intermittent injection was confirmed by the above examples.

Furthermore, it was confirmed that a finer adjustment of the properties of the air-mixed PM-containing gas can be attained by using an exhaust gas purifying apparatus evaluation apparatus according to the present invention, as results of Example 26 mentioned above. The evaluation of the performance of purification system wherein DPFs or catalysts having diameter exceeding 380 mm is provided can be done, since an air-mixed PM-containing gas having a predetermined characteristic can be produced.

The PM generating apparatus, the exhaust gas purifying apparatus evaluation apparatus, and the PM generating method of the present invention can be used for evaluating performance and/or durability of an exhaust gas purifying apparatuses equipped with a filter to remove fine particles from exhaust gas and/or a catalyst which decomposes toxic substances in the exhaust gas.

## Claims

1. A PM generating apparatus for generating particulate matter (PM) in a gas by burning a liquid and/or gaseous fuel, comprising:
a combustion chamber,
a combustion air supply means that supplies combustion air to the combustion chamber, and
an intermittent fuel injection means which can intermittently inject the fuel to the combustion air supplied to the combustion chamber;
wherein the valve-opening cycle for the intermittent fuel injection means is 10 to 300 msec, and the ratio between the valve-opening time and the valve-opening cycle is 0.05 to 0.6.

2. The PM generating apparatus according to claim 1, wherein the intermittent fuel injection means is equipped with an electric valve and the fuel is intermittently injected by controlling the valve-opening time and/or valve-opening interval of the electric valve.

3. The PM generating apparatus according to claim 1 or 2, equipped with a fuel injection pressure control means which can change the injection pressure of the fuel.

4. The PM generating apparatus according to claim 3, wherein the fuel injection pressure control means can change the injection pressure one or more times in the course of the fuel injection.

5. The PM generating apparatus according to any one of claims 1 to 4, wherein the injection pressure of the fuel is more than 0.1 MPa but not more than 1.0 MPa.

6. The PM generating apparatus according to any one of claims 1 to 5, further comprising a fuel-mixing means that can produce a fuel mixture by previously mixing a liquid fuel and gaseous fuel before injection when using the liquid fuel and gaseous fuel.

7. The PM generating apparatus according to any one of claims 1 to 6, further comprising with a fuel-mixing means that can previously mix a gas other than fuel with the fuel before injection.

8. The PM generating apparatus according to claim 7, wherein the gas other than fuel is air.

9. The PM generating apparatus according to any one of claims 1 to 8, wherein the liquid fuel is gas oil or heavy fuel oil.

10. The PM generating apparatus according to any one of claims 1 to 9, wherein the destination to which the gas in which PM is generated is sent is an exhaust gas purifying apparatus, and the PM generating apparatus is used for evaluating the exhaust gas purifying apparatus.

11. An apparatus for evaluating an exhaust gas purifying apparatus by supplying a mixed PM-containing gas to the exhaust gas purifying apparatus, comprising:
a plurality of PM generating apparatuses of any type according to claims 1 to 10,
a controlling means which can operate the plurality of PM generating apparatuses under the same conditions or at least one PM generating apparatus under the conditions differing from the conditions under which the other PM generating apparatuses are operated, and
a PM-containing gas-mixing means to mix gases in which PM produced in a plurality of PM generating apparatuses was generated to obtai n the mixed PM-containing gas.

12. A PM generating method for generating PM in a gas by burning a liquid and/or gaseous fuel, comprising a step of burning the fuel by intermittently mixing the fuel with a combustion air, using the apparatus of anyone of claims 1 to 10.

## Patentansprüche

1. PM-Erzeugungsvorrichtung zur Erzeugung von Schwebestoffteilchen (*particulate matter,* PM) in einem Gas durch das Verbrennen eines flüssigen und/oder gasförmigen Brennstoffs, wobei die Vorrichtung Folgendes umfasst:
eine Brennkammer,
ein Verbrennungsluftzufuhrmittet, das Verbrennungsluft in die Brennkammer zuführt, und
ein intermittierendes Brennstoffeinspritzmittel, das den Brennstoff intermittierend in die in die Brennkammer zugeführte Verbrennungsluft einspritzen kann;
wobei der Ventilöffnungszyklus für das intermittierende Brennstoffeinspritzmittel 10 bis 300 ms dauert und das Verhältnis zwischen der Dauer des Ventilöffnens und dem Ventilöffnungszyklus 0,05 bis 0,6 beträgt.

2. PM-Erzeugungsvorrichtung nach Anspruch 1, worin das intermittierende Brennstoffeinspritzmittel mit einem elektrischen Ventil ausgestattet ist und der Brennstoff durch die Steuerung der Dauer des Ventilöffnens und/oder des Ventilöffnungsintervalls des elektrischen Ventils intermittierend eingespritzt wird.

3. PM-Erzeugungsvorrichtung nach Anspruch 1 oder 2, die mit einem Mittel zur Steuerung des Brennstoffeinspritzdrucks ausgestattet ist, das den Einspritzdruck des Brennstoffs verändern kann.

4. PM-Erzeugungsvorrichtung nach Anspruch 3, worin das Mittel zur Steuerung des Brennstoffeinspritzdrucks den Einspritzdruck im Verlauf der Brennstoffeinspritzung ein Mal oder mehrmals verändern kann.

5. PM-Erzeugungsvorrichtung nach einem der Ansprüche 1 bis 4, worin der Einspritzdruck des Brennstoffs mehr als 0,1 MPa, aber nicht mehr als 1,0 MPa beträgt.

6. PM-Erzeugungsvorrichtung nach einem der Ansprüche 1 bis 5, die ferner ein Brennstoffmischmittel umfasst, das ein Brennstoffgemisch erzeugen kann, indem ein flüssiger Brennstoff und ein gasförmiger Brennstoff vor dem Einspritzen vorab vermischt werden, wenn der flüssige und der gasförmige Brennstoff verwendet werden.

7. PM-Erzeugungsvorrichtung nach einem der Ansprüche 1 bis 6, das ferner ein Brennstoffmischmittel umfasst, das ein Gas, das kein Brennstoff ist, vor dem Einspritzen vorab mit dem Brennstoff vermischen kann.

8. PM-Erzeugungsvorrichtung nach Anspruch 7, worin das Gas, das kein Brennstoff ist, Luft ist.

9. PM-Erzeugungsvorrichtung nach einem der Ansprüche 1 bis 8, worin der flüssige Brennstoff Gasöl oder ein anderes Schweröl ist.

10. PM-Erzeugungsvorrichtung nach einem der Ansprüche 1 bis 9, worin der Zielort, zu dem das Gas, in dem PM erzeugt werden, geleitet wird, eine Abgasreinigungsvorrichtung ist und die PM-Erzeugungsvorrichtung zur Bewertung der Abgasreinigungsvorrichtung verwendet wird.

11. Vorrichtung zur Bewertung einer Abgasreinigungsvorrichtung durch die Zufuhr eines PM-hältigen Gasgemischs in die Abgasreinigungsvorrichtung, wobei die Vorrichtung Folgendes umfasst:
eine Vielzahl an PM-Erzeugungsvorrichtungen einer beliebigen Art nach einem der Ansprüche 1 bis 10,
ein Steuermittel, das die Vielzahl an PM-Erzeugungsvorrichtungen unter denselben Bedingungen oder zumindest eine PM-Erzeugungsvorrichtung unter Bedingungen, die sich von den Bedingungen unterscheiden, unter denen die anderen PM-Erzeugungsvorrichtungen betrieben werden, betätigen kann, und
ein Mittel zum Mischen PM-hältiger Gase zum Mischen von Gasen, in denen PM in einer Vielzahl von PM-Erzeugungsvorrichtungen erzeugt wurde, um das PMhältige Gasgemisch zu erhalten.

12. PM-Erzeugungsverfahren zur Erzeugung von PM in einem Gas durch das Verbrennen eines flüssigen und/oder gasförmigen Brennstoffs, wobei das Verfahren einen Schritt des Verbrennens des Brennstoffs durch das intermittierende Vermischen des Brennstoffs mit Verbrennungsluft umfasst, wobei eine Vorrichtung nach einem der Ansprüche 1 bis 10 verwendet wird.

## Revendications

1. Dispositif de génération de MP pour générer des matières particulaires (MP) dans un gaz en faisant brûler un combustible liquide et/ou gazeux, comprenant :
une chambre de combustion,
un moyen de fourniture d'air de combustion qui fournit de l'air de combustion à la chambre de combustion, et
un moyen d'injection intermittente de combustible qui peut injecter par intermittence le combustible dans l'air de combustible fourni à la chambre de combustion ;
dans lequel le cycle d'ouverture de valve pour le moyen d'injection intermittente de combustible est de 10 à 300 ms, et le rapport entre le temps d'ouverture de valve et le cycle d'ouverture de valve est de 0,05 à 0,6.

2. Dispositif de génération de MP selon la revendication 1, dans lequel le moyen d'injection intermittente de combustible est équipé d'une valve électrique et le combustible est injecté par intermittence par contrôle du temps d'ouverture de valve et/ou de l'intervalle d'ouverture de valve de la valve électrique.

3. Dispositif de génération de MP selon la revendication 1 ou 2, équipé d'un moyen de commande de pression d'injection de combustible qui peut changer la pression d'injection du combustible.

4. Dispositif de génération de MP selon la revendication 3, dans lequel le moyen de commande de pression d'injection de combustible peut changer la pression d'injection une ou plusieurs fois au cours de l'injection de combustible.

5. Dispositif de génération de MP selon l'une quelconque des revendications 1 à 4, dans lequel la pression d'injection du combustible est supérieure à 0,1 MPa mais ne dépasse pas 1,0 MPa.

6. Dispositif de génération de MP selon l'une quelconque des revendications 1 à 5, comprenant en outre un moyen de mélange de combustible qui peut produire un mélange combustible en mélangeant au préalable un combustible liquide et un combustible gazeux avant injection lors de l'utilisation du combustible liquide et du combustible gazeux.

7. Dispositif de génération de MP selon l'une quelconque des revendications 1 à 6, comprenant en outre un moyen de mélange de combustible qui peut mélanger au préalable un gaz autre que le combustible avec le combustible avant injection.

8. Dispositif de génération de MP selon la revendication 7, dans lequel le gaz autre que le combustible est l'air.

9. Dispositif de génération de MP selon l'une quelconque des revendications 1 à 8, dans lequel le combustible liquide est le gazole ou une huile combustible lourde.

10. Dispositif de génération de MP selon l'une quelconque des revendications 1 à 9, dans lequel la destination à laquelle est envoyée le gaz dans lequel des MP sont générées est un dispositif de purification de gaz d'échappement, et le dispositif de génération de MP est utilisé pour évaluer le dispositif de purification de gaz d'échappement.

11. Dispositif pour évaluer un dispositif de purification de gaz d'échappement par fourniture d'un gaz mixte contenant des MP au dispositif de purification de gaz d'échappement, comprenant :
une pluralité de dispositifs de génération de MP de types quelconques selon les revendications 1 à 10;
un moyen de commande qui peut faire fonctionner la pluralité de dispositifs de génération de MP dans les mêmes conditions ou au moins un dispositif de génération de MP dans des conditions différentes des conditions dans lesquelles fonctionnent les autres dispositifs de génération de MP, et
un moyen de mélange de gaz contenant des MP pour mélanger des gaz dans lesquels des MP produites dans une pluralité de dispositifs de génération de MP ont été générées pour obtenir le gaz mixte contenant des MP.

12. Procédé de génération de MP pour générer des MP dans un gaz en faisant brûler un combustible liquide et/ou gazeux, comprenant une étape consistant à brûler le combustible en mélangeant de façon intermittente le combustible avec un air de combustion, utilisant le dispositif de l'une quelconque des revendications 1 à 10.
